# EUROPEAN PATENT APPLICATION

(11) **EP 4 653 743 A1**
(43) Date of publication of application: **26.11.2025**
(21) Application number: 24177025.4
(22) Date of filing: 21.05.2024
(51) Int. Cl.: F16L 37/34, F16L 37/35

(54) **HYDRAULIC QUICK COUPLING**

(71) Applicant: Oilquick AB, 824 12 Hudiksvall (SE)
(72) Inventor: VALLIN, Jakob, 82435 HUDIKSVALL (SE); LOO, Mikael, 82450 HUDIKSVALL (SE)
(74) Representative: Groth & Co. KB

(57) **Abstract**

This disclosure refers to a hydraulic quick coupling designed to enhance hydraulic fluid flow efficiency. The coupling comprises a female part (2), which includes a female central part (6) situated within a female outer casing (8). The outer casing features a sleeve (40) that slides within an aperture (48), and the central part (6) partially sits within the aperture (48). A female spring mechanism (10) positioned between the sleeve and the central part provides the necessary force to block hydraulic flow when the female part (2) is not engaged with a male part (4). The central part (6) is comprised of a plunger end (18) and an attaching end (20), with the latter having a female central opening (36) to facilitate the passage of hydraulic fluid. The coupling is distinguished by at least two non-centrally arranged stays (32) that extend from the periphery of the attaching end's opening to the plunger end (18). These stays (32) are designed to minimize turbulence in the hydraulic fluid flow by ensuring a streamlined path for the hydraulic fluid, significantly enhancing the efficiency of the hydraulic quick coupling.

## Description

### Technical Field

The invention relates to the field of hydraulic quick couplings, used in many different applications where hydraulic systems are involved and where tools having hydraulic systems or other devices need to be coupled to or de-coupled from the hydraulic system.

### Background of the Invention

Hydraulic quick couplings are specialized devices designed to quickly connect and disconnect two pieces of equipment, allowing for the efficient transfer of pressurized fluid or gas from one system to another. These couplings are components in various industrial and constructional applications, providing secure and reliable connections between hydraulic lines while minimizing the risk of contamination from external sources and by maintaining hydraulic pressure after coupling. Further, these connections normally aim to avoid leakage of hydraulic fluid when they are in a de-coupled state.

The basic structure of a hydraulic quick coupling consists of two halves: the male half and the female half, configured to engage with male half.

When connected, these halves form a tight bond that prevents leakage, yet they can be disconnected when required. There are several types of hydraulic quick couplers available, each designed to meet specific application needs, such as size, pressure rating, material compatibility, and temperature range. Some of the common types include:
- Pioneer Hydraulic Couplers (PHC), known for their threaded connections with double shut-off valves;
- High-Pressure Quick Release Couplings (HPQRC), which feature snap-lock mechanisms;
- Non-Spill Quick Disconnect Couplings, offering superior chemical resistance; and
- General Purpose Couplings (GPC), capable of handling higher pressures but requiring more space due to their larger size profile.

The inventive design can be applied to all of the mentioned types of hydraulic couplings.

Choosing the correct type of hydraulic quick coupling depends mainly on the application requirements, such as the operating environment/conditions.

Hydraulic quick couplings are prevalent in various sectors, including heavy machinery, hydraulic systems, and other industrial applications. Their primary function is to swiftly and efficiently connect and disconnect hydraulic lines without significant fluid leakage or air invasion into the system. They are typically composed of a male part and a female part that must be precisely designed to provide secure coupling and decoupling operations.

In here hydraulic quick couplings for quick coupling units are discussed. Quick coupling units are designed to switch tools that require hydraulics, for example hammers, claws, grippers, vibrators or other special tools on industrial machines or construction machines such as cranes, digging machines, robots and so on. A problem in these designs is typically that the hydraulic quick coupling, thus the actual coupling part, leads to pressure loss and/or fluid flow loss in the hydraulic system due to decrease in cross sectional surface and poor design choices in which surfaces induce turbulence and resistance in the hydraulic flow and therewith lead to hydraulic fluid obstruction, which in itself leads to pressure loss.

One of the common designs of such couplings involves a female part with a central portion arranged within an outer casing featuring an aperture. A spring mechanism is typically placed between a sleeve and the central portion. The central part typically also comprises some sort of a plunger, which interacts with an end of the sleeve via a spring, effectively obstructing hydraulic flow.

However, conventional designs face certain challenges concerning efficient fluid flow when in a coupled state. Specifically, design elements may induce drag on the hydraulic fluid flow due to their positioning or shape, which can potentially decrease overall system performance, in particular hydraulic fluid flow rate and pressure loss. Other challenges include the creation of turbulence in the hydraulic fluid flow due to shapes that are not streamlined or shapes that are arranged at rectangular angles to the fluid flow. In particular surfaces with rectangular or perpendicular orientation against the fluid flow generate so called stagnation points, which are points in which the hydraulic fluid has no speed and therewith stands still.

Notably absent from prior solutions is an optimized structure aiming to minimize drag while ensuring continued operation without creating substantial resistance or reducing efficiency and pressure loss while preventing hydraulic fluid leakage in a decoupled state.

### Summary of the Invention

The need for improved flow dynamics within such couplings points towards a design featuring non-centrally arranged stays that interconnect the plunger end and attaching end extending from the periphery of the attaching end's central opening towards the plunger end.

The current landscape also lacks sufficient variety in terms of possible shapes for these components - limiting possibilities for optimization based on specific use cases or operational requirements. For instance, it could be beneficial if there was flexibility in designing parts like plungers - allowing them to take forms such as cones or domes oriented towards or away from specific sections while considering flat portions as well as cone- or dome-shaped parts, since such shapes generally have a reduced influence on the turbulence and therewith obstruction in the fluid dynamics and therewith hydraulic fluid flow.

The inventor has realized that advancements within this field may encompasses refining surfaces that interact directly with fluid flows - especially those relating to non-centrally arranged stays that connect to a plunger in the female part. The inventor also realized that it would be beneficial if such non-centrally arranged stays were streamlined to minimize drag effects while still maintaining structural stability necessary for sustaining coupling operations with high efficiency over extended periods under high pressures typical in many applications involving hydraulics. Another feature the inventor discovered was to orient the non-centrally arranged stays inclined towards the general hydraulic fluid flow direction. Further, the inventors realized that improvements in the design of the hydraulic coupling can be measured and improved by analysing the differential pressure prior to the coupling compared to the pressure after the coupling, when the coupling is in a connected or coupled state.

The inventor has also realized the inventive coupling design can be applied to all types of hydraulic couplings, it may be in particular beneficial for High-Pressure Quick Release Couplings (HPQRC). Such HPQRC are connected via an actuator action, in which a hydraulic cylinder or other type of actuator presses the female part and the male part of an HPQRC together in a connected state.

In view of the above it is an advantageous feature of the present invention to provide a hydraulic quick coupling that is efficient and reliable.

Another advantageous feature of the invention is that the hydraulic quick coupling unit is easy to use and sustainable.

Disclosed herein is a hydraulic quick coupling comprising a female part having a female central part and a female outer casing. The female outer casing comprises a sleeve and an aperture, wherein the sleeve is arranged slideable in the aperture. The female central part is arranged at least partially within the aperture of the female outer casing. The female part further comprises a female spring mechanism, which is arranged between the sleeve and the female central part.

The female central part comprises a plunger end and an attaching end having a female central opening for passing of hydraulic fluid. The plunger end is designed so that a hydraulic flow of hydraulic fluid is blocked in a de-coupled state due to pressure from the female spring mechanism that is pushing the sleeve and a sealing of the sleeve, respectively, into engagement with the plunger end.

A feature of the invention is that the female part further comprises at least two non-centrally arranged stays designed to interconnect the plunger end and the attaching end. These non-centrally arranged stays thereby extend from a periphery of the female central opening of the attaching end towards the plunger end.

Since the plunger end is arranged centrally as seen in relation to the female central opening, the non-centrally arranged stays extend at an angle to the general hydraulic fluid flow direction. This angle may be an acute angle.

In an embodiment, the plunger end is designed as a cone or a dome comprising a flat part and a cone- or dome-shaped part. The flat part of the cone or dome is oriented away from the female central opening and the cone- or dome-shaped part is oriented towards the female central opening.

This configuration aids in directing the hydraulic fluid flow in a smooth and dynamic manner without inducing unnecessary turbulence into the hydraulic fluid flow.

Another aspect of the invention is that the at least two non-centrally arranged stays are designed streamlined in order to minimize drag on the hydraulic fluid flow.

This streamlined design reduces turbulence and pressure losses in the fluid flow.

In a further embodiment, the at least two non-centrally arranged stays have edges oriented towards the hydraulic fluid flow, at least on an inner side.

These edges may be rounded or rather sharp and help to guide the fluid flow smoothly without inducing unnecessary turbulence.

An additional feature is that the at least two non-centrally arranged stays define openings in between themselves for allowing hydraulic fluid flow in a coupled state. The lateral surface area defined by these openings is greater than the surface area defined by the least two non-centrally arranged stays, at least versus such a lateral surface defined by the at least two non-centrally arranged stays.

The above explained surface comparison relates to an imaginary lateral surface defined by the non-centrally arranged stays and there openings in between themselves, no matter if two, three or more non-centrally arranged stays are installed.

This helps to reduce drag by the at least two non-centrally arranged stays.

In another embodiment, the at least two non-centrally arranged stays have a thin elongated shape.

This shape minimizes the material used while still providing structural support.

A further aspect is that the female part comprises at least three non-centrally arranged stays. The use of three or more stays provides additional structural stability.

In an embodiment with at least three non-centrally arranged stays, the stays define openings in between themselves for allowing hydraulic fluid flow in a coupled state. The lateral surface area defined by these openings is greater than the surface area defined by the at least three non-centrally arranged stays. Again, this ensures minimal obstruction to fluid flow.

The surface comparison also refers to the lateral surface defined by the at least two non-centrally arranged stays.

Another feature is that the sleeve further comprises a sealing arranged at one end, wherein the female spring mechanism is pushing the plunger end into engagement with the sealing of the sleeve. This sealing blocks the hydraulic fluid flow.

In a further embodiment, the plunger end is centrally arranged in relation to the female central opening.

An additional aspect is that the at least two or at least three non-centrally arranged stays extend in a direction that is inclined as seen versus a general flow direction of the hydraulic fluid.

This inclined orientation guides the fluid flow smoothly with reduced induced turbulence.

The hydraulic quick coupling may further comprise a male part designed for coupling to the female part. The male part has a male central part and a male outer casing with a male central opening. The male central part is arranged within the male outer casing and further comprises a hydraulic lock, at least two webs, a male spring mechanism, and a streamlined central pylon having a cone shaped end and a dome shaped end. The at least two webs fixedly connect the streamlined central pylon with the male outer casing. The hydraulic lock is connected to the streamlined central pylon via the male spring mechanism so that the hydraulic lock closes the male central opening and therewith blocks hydraulic flow in a de-coupled state due to pressure generated by the male spring mechanism.

In an embodiment of the male part, the cone shaped end of the streamlined central pylon comprises a flat bottom end. The flat bottom end is designed to point at the hydraulic lock so that an outer radius of the bottom end is flush with an outer radius of the hydraulic lock.

This flush configuration provides a smooth transition for the hydraulic fluid flow.

Another feature of the male part is that the at least two webs comprise edges, rounded or rather sharp, directed towards a hydraulic fluid flow direction and therewith oriented towards and away from the male central opening. These edges guide the fluid flow and minimize turbulence.

In the coupled state between the female part and the male part, the plunger end is designed to engage the hydraulic lock thereby pushing the hydraulic lock into the male central opening during coupling. In the coupled state, the male outer casing pushes the sleeve into the female outer casing for enabling hydraulic fluid flow through the female central opening, the openings defined by the at least two- or at least three non-centrally arranged stays over the plunger end, over the hydraulic lock and through openings between the webs into the male central opening, in both directions.

In a further embodiment of the male part, the male spring mechanism comprises a central pin extending from the hydraulic lock towards the male central opening, a bore arranged at the cone shaped end of the streamlined central pylon, and a spring. The pin is designed to at least partially extend into the bore in a de-coupled state and the spring is arranged on the pin and extends into the bore. In this way, the hydraulic lock closes the male central opening and therewith hydraulic flow in a de-coupled state due to pressure generated by the male spring mechanism.

This spring-loaded mechanism ensures a tight seal when the female part is decoupled from the male part.

The technical effect of the herein disclosed design is that hydraulic fluid flow is increased in light of state of the art couplings and that therewith the pressure losses are reduced upon coupling of tools or the like using the hydraulic quick coupling according to the invention. The non-centrally arranged stays in the female part and the streamlined central pylon with webs in the male part are configured to guide the fluid flow smoothly with minimal obstruction, turbulence, and pressure loss.

In here several terms are used and explained, some of which are explained referring to the figures and some of which are herewith explained and defined:

### Hydraulic Quick Coupling

A hydraulic quick coupling is a device that allows for the quick and easy connection and disconnection of fluid lines, in this case, hydraulic lines. These devices are designed to be easily operated, often automatically and to provide a secure, leak-free connection upon automatic coupling of tools and the like. They are commonly used in applications where hydraulic lines need to be frequently connected and disconnected, such as in hydraulic machinery or equipment. Typically hydraulic quick couplings comprise a female part and a male part, whereby the male part can be at least partially inserted into the female part to generate a leak-free and tight coupling so that hydraulic fluid can pass.

### Female Part

The female part of the hydraulic quick coupling is the part that receives or accepts the male part of the coupling in a relative movement. In the solution presented herein the female part is preferably located in the H-cylinder while the male part is arranged on the tool that is coupled to the machine. It typically includes a central part and an outer casing. The central part is arranged, at least partially, within the outer casing and includes a plunger end and an attaching end. The plunger end is designed to block the flow of hydraulic fluid when the coupling is not connected. The attaching end has an opening for the passage of hydraulic fluid. The female part also includes a spring mechanism that pushes the sleeve end into engagement with the plunger, blocking the flow of hydraulic fluid when the coupling is not connected. This mechanism involving the plunger or plunger end, the spring mechanism and the sleeve may however be reversed or designed differently and is not directly related to the inventive thought disclosed herein.

### Male Part

The male part of the hydraulic quick coupling is the part that is inserted or connected to the female part of the coupling in a relative movement. As mentioned, the male part may sit on the tool that is coupled to the machine. It may include a central part and an outer casing having a male central opening. The central part is arranged within the outer casing and includes a hydraulic lock and a spring mechanism. The hydraulic lock is designed to close the central opening of the male part, blocking the flow of hydraulic fluid when the coupling is not connected. In order to achieve that the spring mechanism pushes the hydraulic lock into the central opening, blocking the flow of hydraulic fluid when the coupling is not connected. For providing support to the hydraulic lock, the spring mechanism is arranged between the hydraulic lock and the male central part, which male central part may comprise a streamlined central pylon that is held within an aperture of the male outer casing and it may be held in place via webs that extend from the outer casing towards the streamlined pylon.

### Non-Centrally Arranged Stays

Non-centrally arranged stays are elements that are designed to interconnect the plunger end and the attaching end of the female part of the hydraulic quick coupling. These stays extend from the periphery of the central opening of the attaching end towards the plunger end. They are arranged in a non-central manner, meaning they are not located at or around the center of the opening. These stays can be designed in a streamlined manner to minimize drag on the hydraulic fluid flow. They may also be designed as spokes. In here such non-centrally arranged stays extend at an angle to the general flow direction of hydraulic fluid, which angle is acute as not to generate unnecessary drag on the hydraulic fluid.

### Hydraulic Lock

The hydraulic lock is a component of the male part of the hydraulic quick coupling. It is connected to the central male part of via a spring mechanism. The hydraulic lock is designed to close the central opening of the male part, blocking the flow of hydraulic fluid when the coupling is not connected. The spring mechanism pushes the hydraulic lock into the central opening, blocking the flow of hydraulic fluid when the coupling is not connected and therewith when the plunger end of the female part is not engaging the hydraulic lock.

### Streamlined Central Pylon

The streamlined central pylon is a component of the male part of the hydraulic quick coupling. It is connected to the outer casing of the male part via at least two webs. It may be connected to the outer casing via three webs or four webs. Ideally as few webs as possible while maintaining stability. The central pylon is designed in a streamlined manner to minimize drag on the hydraulic fluid while flowing through the opening. It includes a cone-shaped end and a dome-shaped end. The cone-shaped end includes a flat bottom end that is designed to point at the hydraulic lock. The dome-shaped end points away from the hydraulic lock and this dome-shaped end may also be designed as a cone having a tip. The outer radius of the bottom end is flush with the outer radius of the hydraulic lock.

### Webs

Webs are elements that connect the streamlined central pylon with the outer casing of the male part of the hydraulic quick coupling. These webs can be designed with edges, rounded or rather sharp, directed towards the general flow direction of the hydraulic fluid in order to minimize drag and turbulence. The webs define openings between themselves that allow for the flow of hydraulic fluid to pass through. The design disclosed herein optimizes the flow of hydraulic fluid.

Herein the plunger end may be called a free plunger end or an engaging end or a free engaging end.

Further the cone shape and dome shape or cone and dome wording may be interchangeable in all aspects and features described herein. Both shapes are rather smooth and advantageous for guiding fluid and decreasing induced turbulence and therewith resistance and pressure loss.

### Brief Description of the Drawings

The present invention will now be described, for exemplary purposes, in more detail by way of an embodiment(s) and with reference to the enclosed drawings, in which:
- Fig. 1: schematically illustrates a perspective view of a female part of a hydraulic quick coupling according to the invention;
- Fig. 2: schematically illustrates a cross sectional view of the female part of figure 1;
- Fig. 3: schematically illustrates a female central part of the female part according to figures 1 and 2;
- Fig. 4: schematically illustrates a view into the female part from a side opposite a plunger end;
- Fig. 5: schematically illustrates a side view of the female part with an outer housing removed for illustrative purposes;
- Fig. 6: schematically illustrates a perspective view of the female part;
- Fig. 7: schematically illustrates a view into a male part as seen towards the female part in the connected state;
- Fig. 8: schematically illustrates a cross sectional side view of the male part;
- Fig. 9: schematically illustrates a side view of a male central part;
- Fig. 10a: schematically illustrates the female part and the male part in a state exactly prior to coupling in which state hydraulic fluid flow is still blocked,
- Fig. 10b: schematically illustrates a cross sectional view of figure 1 0a;
- Fig. 11a: schematically illustrates the female part and the male part in a fully coupled state, and
- Fig. 11b: schematically illustrates a cross sectional view of figure 11a.

### Detailed Description

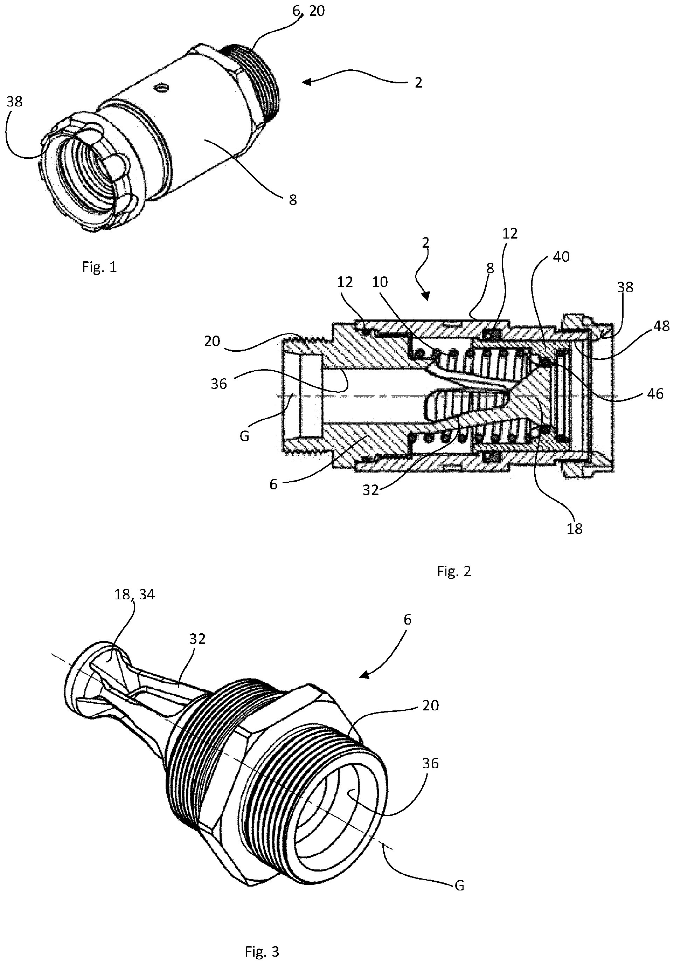

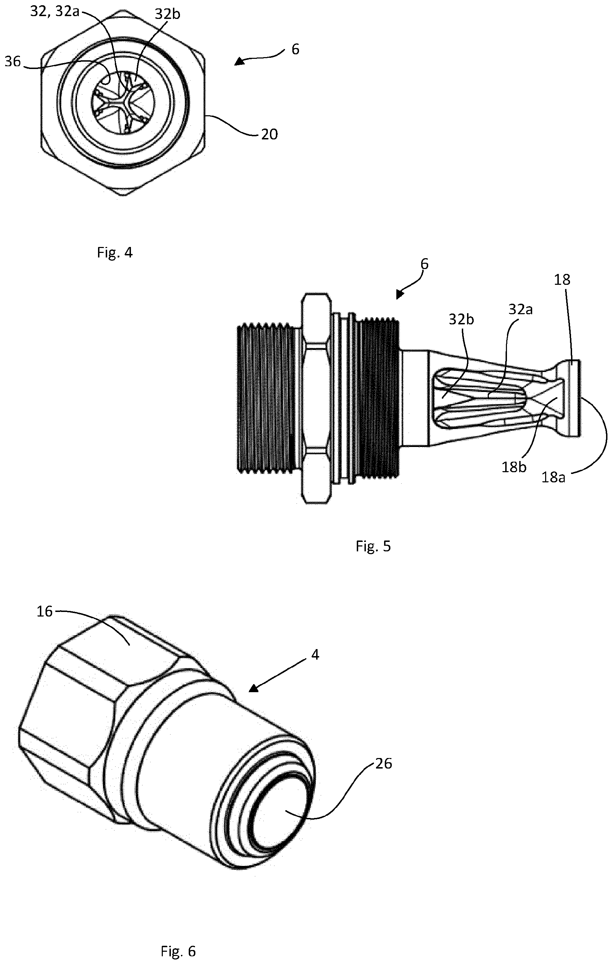

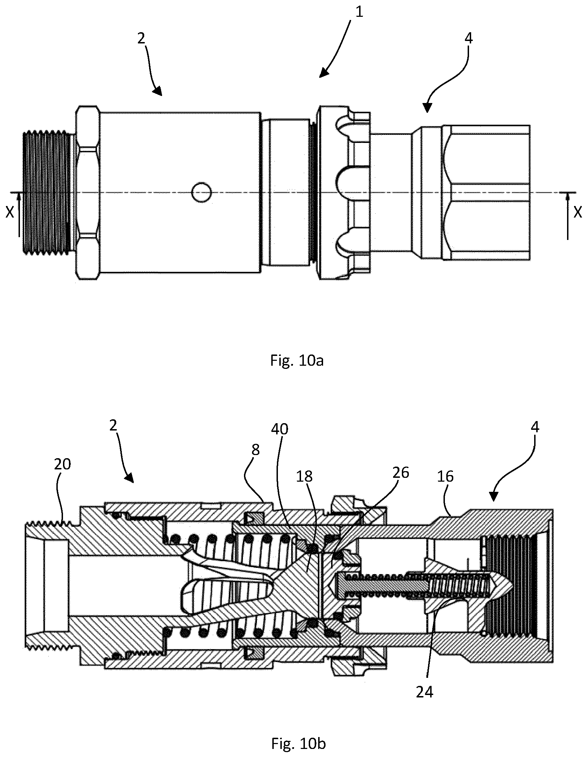

Figure 1 illustrates a female part 2 of a hydraulic quick coupling system or a hydraulic quick coupling 1 (c.f. figures 10a to 11b). The female part 2 comprises a female central part 6, which includes an attaching end 20, and which female central part is at least partially arranged within a female outer casing 8. Surrounding this female central part 6 is the female outer casing 8, which comprises an open end 38 configured to be attached to a male part 4 (c.f. figure 6). The attaching end 20 is designed to be connected to a hydraulic line for example via a screw/thread connection as illustrated. Any other connections such as snap on mechanisms, or the like may however also be feasible. Figure 1 is a perspective drawing, providing a three-dimensional representation of the female part 2.

Figure 2 illustrates a cross sectional view cut along the general flow direction of hydraulic fluid G of the female part 2 as shown in figure 1 an.

The female part 2 comprises a central part 6 and an outer casing 8. The central part 6 comprises a plunger end 18 and an attaching end 20, which serves as a point for securing the female part 2 to another component or system, typically a hydraulic line. The attaching end 30 comprises a central opening 36 designed for the passing of hydraulic fluid when the female part 2 is coupled to a male part (c.f. figure 6). The plunger end 18 is designed as an inverted cone-shaped free end 34, which is also illustrated in figure 3. The plunger end 18 comprises a flat surface designed for engaging a hydraulic lock of a male part. The cone-shape or dome-shape of the plunger end 18 will further be described referring to figure 3.

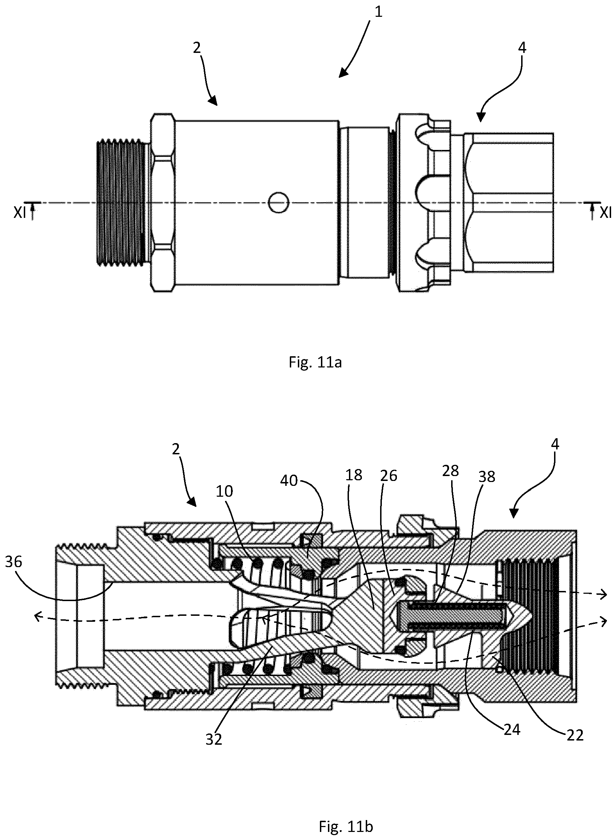

The female central part 6 comprises at least two non-centrally arranged stays 32, designed to interconnect the attaching end 20 and the plunger end 18. In the illustrated embodiment in figure 2, there are three non-centrally arranged stays 32 extending from a periphery of the female central opening 36 towards the plunger end 18. The non-centrally arranged stays 32 are therewith oriented at an angle inclined to the general flow direction of hydraulic fluid G, forming an acute angle with latter so as to provide minimal obstruction to the flow of hydraulic fluid in a coupled state (c.f. figures 11a and 11b). The inclined arrangement of the non-centrally arranged stays 32 is also due to the central arrangement of the plunger end 18 due to its function during coupling of the female part 2 to the male part, as explained later herein. As previously mentioned another number of non-centrally arranged stays 32 may be implemented such as two, four or even five. The main goal always being to optimize a lateral surface defined by openings arranged in between the non-centrally arranged stays 32 versus a lateral surface defined by the non-centrally arranged stays 32 so that a maximum amount of fluid can pass through the openings and in the coupled state. These non-centrally arranged stays 32 are designed streamlined, in order to optimize considerations for fluid dynamics.

The female outer casing 8, encapsulates part of the female central part 6 and has an open end 38, which allows for the entry or connection to other components, typically a male part, during and after coupling. The female outer casing 8 further comprises an aperture 48 and a sleeve 40, which is arranged inside the female outer casing 8 in the aperture 48 in a slideable manner. Within the sleeve 40, a sealing 46 or O-ring is situated, providing a seal to prevent the escape of fluid or the entry of contaminants in a de-coupled state. The female central part 6 is fixedly arranged versus the female outer casing 8 such as for example screwed or clamped into the female outer casing 8.

The female part 2 further comprises a spring mechanism 10 interacting with the sleeve 40 and the female central part 6. The spring mechanism 10 is configured to press the sleeve 40 and its sealing 46 into engagement with a peripheral surface of the plunger end 18 in a de-coupled state in order to block hydraulic fluid flow.

The spring mechanism 10 and its spring, respectively, is arranged to have a diameter greater than the female central opening 36 so that it does not obstruct hydraulic fluid flow. Ideally the spring mechanism 10 extends from an outer side of the periphery of the female central opening 36 on an outer side of the non-centrally arranged stays 32 towards the sleeve 40. The spring mechanism 10 and the sleeve 40 are designed and intended to be engaged by the male part (c.f. figures 10a to 11b) during coupling for allowing hydraulic fluid flow along the general flow direction G of hydraulic fluid.

Further, the female part 2 may comprise various sealings 12, represented by O-rings or other shapes in order to tighten the various parts of the female part 2 against hydraulic fluid loss and so on. The sealings 12 are strategically placed throughout the female part 2 to ensure fluid or air-tight connections between the different moving and static components. These sealings are critical in maintaining the integrity of the system, preventing leakage, and ensuring smooth operation of the moving parts.

Figure 3 illustrates the female central part 6 isolated from other components for better illustration of the streamlined shapes and design. The female central part 6 comprises the plunger end 18 with an inverted cone shape 34, which is oriented towards the female central opening 36 with its point-end and whereby its flat part is oriented away from the female central opening 36. This conical configuration aids in directing the hydraulic fluid when it is flowing along the general flow direction G of hydraulic fluid, into the female central part with minimal fluid resistance.

The non-centrally arranged stays 32, which are non-centrally arranged and identified as item 32, serve as structural connections between the plunger end 18 and the attaching end 20. The non-centrally arranged stays 32 are positioned and designed to ensure structural integrity while allowing for optimal flow of the hydraulic fluid. The non-centrally arranged stays 32 may comprises edges, which may be formed least slightly sharp or rounded towards an outer side and an inner side so that the hydraulic fluid flow is smoothly parted and optimized. These edges and streamlined shapes are also well visible in figure 4, which is a view into the attaching and 20 as seen towards the plunger end 18 of the female central part 6, illustrating well how the non-centrally arranged stays 32 are designed to "cut" through the flow of hydraulic fluid in a smooth and efficient manner by implementing edges 32a or rather edges towards the flow of hydraulic fluid. The non-centrally arranged stays further comprise include inclined or slightly rounded surfaces 32b extending directly from a periphery of the female central opening 36.

The entire part of the female central part 6 that comes into contact with the hydraulic fluid is designed with streamlining in mind. The contours of the plunger end 18 and the non-centrally arranged stays 32 are smoothed and shaped to conform to the direction G of the fluid flow, thereby reducing turbulence and resistance in the flow. This streamlining is critical in maintaining efficient fluid dynamics, as it helps to minimize the formation of vortices and other forms of turbulent flow, which can lead to energy loss and decreased performance of the hydraulic system in particular pressure loss. The attention to fluid dynamics is evident in the design, as all elements work in concert to ensure a smooth and efficient flow of the hydraulic fluid within the system.

Figure 5 further illustrates a side view of the female central part 6, in which the plunger end 18 and the non-centrally arranged stays 32 are further illustrated in detail. The edges 32a and the inclined or slightly rounded surfaces 32b of the non-centrally arranged stays 32 are also well visible in figure 5. The edges 32a of the non-centrally arranged stays 32 go over directly into the cone-shape 18b of the plunger end 18, where they basically meet the tip of the cone-shape 18b for optimal fluid flow performance. Figure 5 further also illustrates the flat shaped part 18a of the plunger end 18. With such a design the hydraulic fluid basically never meets a surface that is arranged perpendicular to the flow direction when the hydraulic fluid is flowing through the openings in between the non-centrally arranged stays 32, which leads to optimal fluid dynamics and therewith reduced pressure loss.

Turning now to figure 6, a perspective view of a male part 4 comprising a male outer casing 16 and a hydraulic lock 26 is illustrated.

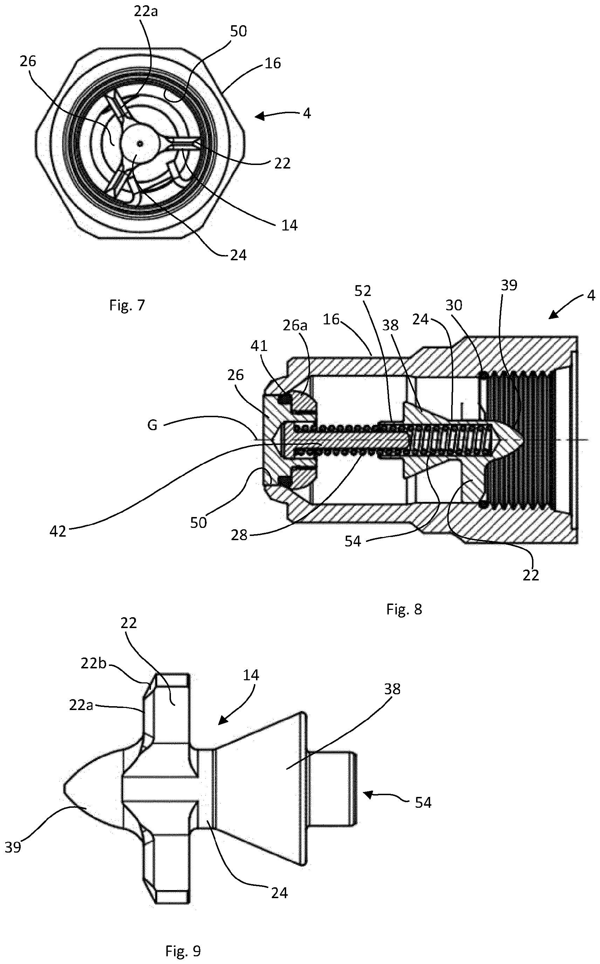

Figure 7 illustrates a plane rear view of the male part 4 as seen from a side opposite the hydraulic lock 26 into a male central opening 50. The male part 4 comprises a male central part 14 having webs 22, three webs 22 in the illustrated embodiment, and a streamlined central pylon 24. The streamlined central pylon 24 is hold in place by the webs 22 which are fixedly connected to the male outer casing 16 and the streamlined central pylon 24. The webs 22 are shaped so that they have edges 22a oriented towards the general flow direction G of hydraulic fluid (c.f. figure 8).

Figure 8 illustrates a cross sectional view of the male part 4, in which the general fluid flow direction G is illustrated. It is to be noted that the hydraulic fluid may flow along the direction G in both directions depending on the requirements of the application.

The male part 4 comprises the outer casing 16 and the male central part 14 with the webs 22 and the streamlined central pylon 24 is arranged within the outer casing. The hydraulic lock 26 comprises a ring element 26a that has a slightly greater diameter than the hydraulic lock 26 so that it can engage with a sealing 41, depicted in the form of an O-ring for sealing the flow of hydraulic fluid in the de-coupled state, as shown in figure 8. From the hydraulic lock 26, a pin 42 extends towards the streamlined central pylon 24, whereby a male spring mechanism 28 comprising a spring, is engaging the pin 42 and a bore 54 in the streamlined central pylon 24 so that the hydraulic lock is pressed into engagement with the sealing 41, thereby closing of the male central opening 50 and therewith blocking the hydraulic fluid flow and therewith preventing leakage in the decoupled state.

Still referring to figure 8, the male central part 14 and the streamlined central pylon 24 further comprise a dome-shaped part 39, directed away from the hydraulic lock 26, and a cone-shaped end part 38 being directed towards the hydraulic lock 26, with its flat end. The cone-shaped end part 38 further comprises a circular flange 52 extending away from the flat end. Various sealings 30 are further embedded to ensure that the hydraulic fluid is not leaking anywhere, in particular not if any hose or tubing is connected to the male part 4.

Figure 9 illustrates a side view of the male central part 14 comprising the streamlined central pylon 24 and the webs 22. As can be seen the male central part 14 is preferably made of one piece of material, whereby the webs 22 are fixedly connected to the streamlined central pylon 24 in between the dome-shaped end 39 and the cone-shaped end 38. From figure 9 it can be seen how the tip of the dome-shaped end 39 and an imaginary tip (not shown) of the cone-shaped end 38 are oriented in the same direction. The circular flange 52 is also well visible in figure 9, extending from the cone-shaped part 39 of the streamlined central pylon 24. This circular flange 52 may however not be absolutely necessary and could be removed, the functioning of the male part 4 would still be possible.

The webs 22 comprise the edges 22a and inclined surfaces 22b towards the male outer casing 16 (not shown in figure 9) for optimal streamlining and fluid dynamics performance. Albeit only illustrated on one side, the webs 22 may comprises inclined surfaces 22b and edges 22a on both sides, which are directed towards a hydraulic fluid flow direction G.

Figures 10a and 10b illustrate a hydraulic quick coupling 1 a contact between the female part 2 and the male part 4 just prior to coupling. The female part 2 and the male part 4 are aligned and ready to be coupled. Figure 10b illustrates a cross sectional view of the hydraulic quick coupling 1 cut along line X-X of figure 10a.

Figure 10b illustrates how the plunger end 18 comes into contact with the hydraulic lock 26 prior to coupling. The male outer casing 16 is engaging the sleeve 40 and the female outer casing 8 is ready to receive the male part 4.

Finally, upon further insertion of the male part 4 into the female part 2 the hydraulic lock 26 is pressed towards the streamlined central pylon 24 and the sleeve 40 is pressed towards the attaching end 20 and the hydraulic fluid flow between the female part 2 and the male part 4 is allowed, which is illustrated in figures 11a and 11b.

Figures 11a and 11b illustrate the coupled state of the hydraulic quick coupling 1 during which hydraulic fluid flow between the male part 4 and the female part 2 is allowed. Figure 11b illustrates a cross sectional view of the hydraulic quick coupling 1 cut along line XI - XI of figure 11a. Figure 11b illustrates how the hydraulic fluid flows in the coupled state, namely along the dashed line indicated, generally in both directions.

In the coupled state the sleeve 40 is pressed into the female part 2 thereby compressing the spring of the female spring mechanism 10 and the hydraulic lock 26 is pressed towards the streamlined central pylon 24 thereby compressing the spring of the male spring mechanism 28. In the coupled state the hydraulic fluid can flow into the female central opening 36, through openings in between the non-centrally arranged stays 32 over the cone-shape of the plunger end 18, over the hydraulic lock 26, the cone-shaped part 38 of the streamlined central pylon 24, in between the webs 22 into the male central opening 50 and vice versa, meaning also in the other direction. All this with minimal disturbance to the hydraulic fluid, in particular hydraulic oil.

The hydraulic fluid may be hydraulic oil, air or any other suitable fluid or liquid material.

The various components of the male part 2 and the female part 4 may be made of steel or other suitable metal while the sealings and O-rings may be made of rubber or elastomer or the like.

The plunger end 18 has a diameter that is smaller than the male central opening 50.

The invention has now been described referring to the figures and on particular embodiment. It is however clear that various embodiments may be designed, which still fall into the general inventive thought without departing from implementing a fluid dynamically beneficial design. Further, while a hydraulic quick coupling usually may comprise a female part and a male part, the male part or female part disclosed herein may be used with conventional designs of female parts or male parts, while still achieving improved fluid dynamics and therewith reduced pressure losses and increased flow rates.

## Claims

1. A hydraulic quick coupling comprising a female part (2) having a female central part (6) and a female outer casing (8) comprising a sleeve (40) and an aperture (48), the sleeve (40) being arranged slideable in the aperture (48), the female central part (6) being arranged at least partially within the aperture (48) of the female outer casing (8), the female part (2) further comprising a female spring mechanism (10) arranged between the sleeve (40) and the female central part (6), the female central part (6) comprising a plunger end (18) and an attaching end (20) having a female central opening (36) for passing of hydraulic fluid, the plunger end (18) being designed so that a hydraulic flow of hydraulic fluid is blocked in a de-coupled state due to pressure from the female spring mechanism (10) that is pushing the sleeve (40) into engagement with the plunger end (18), **characterized in that** the female part (2) further comprises at least two non-centrally arranged stays (32) designed to interconnect the plunger end (18) and the attaching end (20), said non-centrally arranged stays (32) thereby extending from a periphery of the female central opening (36) of the attaching end (20) towards the plunger end (18).

2. The hydraulic quick coupling according to claim 1, wherein the plunger end (18) is designed as a cone or a dome (34) comprising a flat part and a cone- or dome-shaped part, so that the flat part of the cone or dome is oriented away from the female central opening (36) and a cone- or dome-shaped part is oriented towards the female central opening (36).

3. The hydraulic quick coupling according to claim 1 or 2, wherein the at least two non-centrally arranged stays (32) are designed streamlined in order to minimize drag on the hydraulic fluid flow.

4. The hydraulic quick coupling according to claim 3, wherein the at least two non-centrally arranged stays (32) have edges (32a) oriented towards the hydraulic fluid flow, at least on an inner side.

5. The hydraulic quick coupling according to any of the previous claims, wherein the at least two non-centrally arranged stays (32) define openings in between themselves for allowing hydraulic fluid flow in a coupled state and wherein a lateral surface area defined by the openings is greater than a surface area defined by the least two non-centrally arranged stays (32).

6. The hydraulic quick coupling according to any of the previous claims, wherein the at least two non-centrally arranged stays (32), have a thin elongated shape.

7. The hydraulic quick coupling according to any of the previous claims, wherein the female part (2) comprises at least three non-centrally arranged stays (32).

8. The hydraulic quick coupling according to the previous claims wherein the at least three non-centrally arranged stays (32) define openings in between themselves for allowing hydraulic fluid flow in a coupled state and wherein a lateral surface area defined by the openings is greater than a surface area defined by the at least three non-centrally arranged stays.

9. The hydraulic quick coupling according to any of the previous claims, wherein the sleeve (40) further comprises a sealing (46) arranged at one end, wherein the female spring mechanism (10) is pushing the sealing (46) of the sleeve (40) into engagement with the plunger end (18).

10. The hydraulic quick coupling according to any of the previous claims, wherein the plunger end (18) is centrally arranged in relation to the female central opening (36).

11. The hydraulic quick coupling according to any of the previous claims, wherein the at least two or at least three non-centrally arranged stays (32) extend in a direction that is inclined as seen versus a general flow direction (G) of the hydraulic fluid.

12. The hydraulic quick coupling according to any of the previous claims, further comprising a male part (4) designed for coupling to the female part (2), said male part having (4) a male central part (14) and a male outer casing (16) having a male central opening (50), the male central part (14) being arranged within the male outer casing (16), the male central part (14) further comprising a hydraulic lock (26), at least two webs (22), a male spring mechanism (28), a streamlined central pylon (24) having a cone shaped (38) end and a dome shaped end (39), the at least two webs (22) fixedly connecting the streamlined central pylon (24) with the male outer casing (16), the hydraulic lock (26) being connected to the streamlined central pylon (24) via the male spring mechanism (28) so that the hydraulic lock (26) closes the male central opening (50) and therewith blocks hydraulic flow in a de-coupled state due to pressure generated by the male spring mechanism (28).

13. The hydraulic quick coupling according to the previous claim, wherein the cone shaped end (38) of the streamlined central pylon (24) comprises a flat bottom end and wherein the flat bottom end is designed to point at the hydraulic lock (26) so that an outer radius of the bottom end is flush with an outer radius of the hydraulic lock (26).

14. The hydraulic quick coupling according to the any of the previous claims 12 or 13, wherein the at least two webs (22) comprise edges (22a) directed towards a hydraulic fluid flow direction and therewith at least oriented either towards or away from the male central opening (50).

15. The hydraulic quick coupling according to the previous claims 12 to 14, wherein in the coupled state between the female part (2) and the male part (4), the plunger end (18) is designed to engage the hydraulic lock (26) thereby pushing the hydraulic lock (26) into the male central opening (50) towards the streamlined central pylon (24) during coupling and in the coupled state and wherein the male outer casing (16) is pushing the sleeve (40) into the female outer casing (8) for enabling hydraulic fluid flow through the female central opening (36), the openings defined by the at least two- or at least three non-centrally arranged stays (32) over the plunger end (18), over the hydraulic lock (26) and through openings between the webs (22) into the male central opening (50), in both directions.

16. The hydraulic quick coupling according to any of the previous claims 12 to 15, wherein the male spring mechanism (28) comprises a central pin (42) extending from the hydraulic lock (26) towards the male central opening (50), a bore (54) arranged at the cone shaped end (38) of the streamlined central pylon (24) and a spring, the pin (42) being designed to at least partially extend into the bore (54) in a de-coupled state and the spring being arranged on the pin (42) and extending into the bore (54), so that the hydraulic lock (26) closes the male central opening (50) and therewith hydraulic flow in a de-coupled state due to pressure generated by the male spring mechanism (28).
